# EUROPÄISCHE PATENTANMELDUNG

(11) **EP 4 050 716 A2**
(43) Veröffentlichungstag der Anmeldung: **31.08.2022**
(21) Anmeldenummer: 22153969.5
(22) Anmeldetag: 28.01.2022
(51) Int. Cl.: H01M 50/204, H01M 50/247

(54) **ZELLENHALTER UND AKKUPACK MIT EINEM ZELLENHALTER**

(30) Priorität: 26.02.2021 DE 102021104625
(71) Anmelder: Robert Bosch GmbH, 70442 Stuttgart (DE)
(72) Erfinder: Kneer, Florian, 73105 Duernau (DE); Baumgartner, Josef, 72218 Wildberg (DE)

(57) **Zusammenfassung**

Die Erfindung betrifft einen Zellenhalter für zumindest zwei Akkuzellen, aufweisend zumindest zwei Akkuzellenaufnahmen, die zur Aufnahme einer einzelnen Akkuzelle ausgebildet sind, wobei die Akkuzellenaufnahmen jeweils einen starren Bereich und einen flexiblen Bereich aufweisen. Es wird vorgeschlagen, dass der flexible Bereich teilweise oder vollständig im starren Bereich angeordnet ist.

## Beschreibung

### Stand der Technik

In der DE 10 2015 218 447 A1 ist ein Akkupack für eine Handwerkzeugmaschine beschrieben.

### Offenbarung der Erfindung

Die Erfindung betrifft einen Zellenhalter für zumindest zwei Akkuzellen, aufweisend zumindest zwei Akkuzellenaufnahmen, die zur Aufnahme einer einzelnen Akkuzelle ausgebildet sind, wobei die Akkuzellenaufnahmen jeweils einen starren Bereich und einen flexiblen Bereich aufweisen. Es wird vorgeschlagen, dass der flexible Bereich teilweise oder vollständig im starren Bereich angeordnet ist. Vorteilhaft kann dadurch ein besonders formstabiler Zellenhalter realisiert werden.

Der Zellenhalter ist insbesondere für einen Akkupack vorgesehen. Der Akkupack ist insbesondere Teil eines Systems, das sich aus dem Akkupack und einem Verbraucher zusammensetzt, wobei der Verbraucher während des Betriebs über den Akkupack mit Energie versorgt wird. Der Akkupack ist insbesondere als ein Handwerkzeugmaschinenakkupack ausgebildet. Der Akkupack ist insbesondere als ein Wechselakkupack ausgebildet. Der Akkupack ist insbesondere verbindbar mit einer Ladevorrichtung zum Aufladen des Akkupacks ausgebildet.

Der Akkupack weist ein Gehäuse auf, in welchem die Akkuzelle angeordnet ist, wobei das Gehäuse als ein Außengehäuse ausgebildet ist. Der Akkupack, insbesondere das Gehäuse des Akkupacks, ist über eine mechanische Schnittstelle lösbar mit dem Verbraucher und/oder einer Ladevorrichtung verbindbar. Das Gehäuse des Akkupacks kann ein oder mehrere Gehäuseteile aufweisen. Vorzugsweise ist der Zellenhalter als eines der Gehäuseteile ausgebildet. Die Gehäuseteile sind miteinander kraft-, form- und/oder stoffschlüssig verbunden. Der Zellenhalter ist vorzugsweise aus einem Kunststoff, insbesondere einem thermoplastischen Kunststoff, ausgebildet. Der Zellenhalter kann teilweise das Außengehäuse des Akkupacks bilden. Der Zellenhalter ist vorzugsweise einteilig oder einstückig ausgebildet. Unter einstückig soll im Zusammenhang dieser Anmeldung insbesondere ein Bauteil verstanden werden, dass aus einem Stück ausgebildet und nicht aus mehreren Bauteilen, die stoffschlüssig und/oder kraft- und/oder formschlüssig miteinander verbunden sind, ausgebildet ist. Ein einstückiges Bauteil besteht demnach aus einem einzigen Material. Unter einteilig soll im Zusammenhang dieser Anmeldung insbesondere ein einstückiges Bauteil, oder mehrere Bauteile, die stoffschlüssig, beispielsweise über ein 2K Spritzguss, miteinander verbunden sind, verstanden werden. Alternativ ist auch denkbar, dass der Zellenhalter mehrteilig ausgebildet ist, wobei die unterschiedlichen Teile kraft- und/oder formschlüssig miteinander verbunden sind.

Alternativ ist ebenso denkbar, dass die Akkuzellenaufnahmen derart ausgebildet sind, das zwei oder mehr Akkuzellen in ihnen aufnehmbar sind. Die Akkuzellenaufnahme ist insbesondere derart ausgebildet, dass im mit der Akkuzelle verbundenen Zustand ein Großteil der Außenfläche, insbesondere ein Großteil der Mantelfläche der Akkuzelle, von der Akkuzellenaufnahme umschlossen ist. Insbesondere ist zumindest 60%, vorzugsweise zumindest 75%, bevorzugt zumindest 90%, der Mantelfläche der Akkuzelle an der Akkuzellenaufnahme umschlossen. Vorteilhaft kann dadurch eine gute Wärmeableitung realisiert werden. Insbesondere entspricht eine Form der Akkuzellenaufnahme im Wesentlichen einer Form der aufzunehmenden Akkuzellen. Die Akkuzellenaufnahme ist vorzugsweise auf eine größte zu erwartenden Akkuzelle ausgelegt. In der Akkuzellenaufnahme liegt die Akkuzelle somit insbesondere nur mit einem Linienkontakt an der Ackuzellenaufnahme und/oder an dem federnden Arm an.

Der flexible Bereich ist derart ausgebildet, dass unter Berücksichtigung einer Herstellungstoleranz der Akkuzellen diese kraftschlüssig in der Akkuzellenaufnahme fixierbar ist. Der flexible Bereich weist somit eine Größe auf, die anpassbar ist. Der starre Bereich ist insbesondere derart ausgebildet, dass seine Größe unabhängig von der Größe des flexiblen Bereichs ist. Insbesondere ist der flexible Bereich ein Teil des starren Bereichs, wobei der Anteil des flexiblen Bereichs von der Größe der Akkuzelle abhängig ist.

Der Verbraucher kann insbesondere als ein Gartengerät, wie beispielsweise ein Rasenmäher oder eine Heckenschere, als ein Haushaltsgerät, wie beispielsweise einem elektrischen Fensterreiniger oder Handstaubsauger, als eine Handwerkzeugmaschine, wie beispielsweise ein Winkelschleifer, ein Schrauber, eine Bohrmaschine, ein Bohrhammer, etc., als ein elektrisches Fortbewegungsmittel, wie beispielsweise ein Pedelec oder eBike, oder als ein Messwerkzeug, wie beispielsweise ein Laserentfernungsmessgerät, ausgebildet sein. Des Weiteren ist auch denkbar, dass der Verbraucher als ein anderes insbesondere tragbares Gerät ausgebildet ist, wie beispielsweise eine Baustellenbeleuchtung, ein Absauggerät oder ein Baustellenradio.

Über eine mechanische Schnittstelle ist der Akkupack kraft- und/oder formschlüssig mit dem Verbraucher verbindbar. Vorteilhaft umfasst die mechanische Schnittstelle zumindest ein Betätigungselement, über das die Verbindung des Akkupacks mit dem Verbraucher und/oder mit der Ladevorrichtung lösbar ist. Das Betätigungselement kann beispielsweise als Knopf, Hebel oder als Taster ausgebildet sein. Zudem weist der Akkupack zumindest eine elektrische Schnittstelle auf, über die der Akkupack mit dem Verbraucher und/oder mit der Ladevorrichtung elektrisch verbindbar ist. Über die elektrische Verbindung kann der Ackupack beispielsweise geladen und/oder entladen werden. Alternativ oder zusätzlich ist auch denkbar, dass über die elektrische Schnittstelle Informationen übermittelbar sind. Die elektrische Schnittstelle ist bevorzugt als eine Kontaktschnittstelle ausgebildet, bei der die elektrische Verbindung über einen physischen Kontakt zumindest zweier leitfähiger Bauteile erfolgt. Die elektrische Schnittstelle umfasst bevorzugt zumindest zwei elektrische Kontaktelemente. Insbesondere ist einer der elektrischen Kontaktelemente als Plus-Kontakt und das andere elektrische Kontaktelement als Minus-Kontakt ausgebildet. Zusätzlich kann die elektrische Schnittstelle zumindest einen Zusatzkontakt aufweisen, der dazu ausgebildet ist, zusätzliche Informationen an den Verbraucher und/oder an die Ladevorrichtung zu übertragen. Alternativ oder zusätzlich kann die elektrische Schnittstelle ein sekundäres Ladespulenelement zur induktiven Ladung aufweisen. Des Weiteren ist in dem Gehäuse des Akkupacks die zumindest eine Ackuzelle angeordnet, die über die elektrische Kontaktvorrichtung mit dem Verbraucher elektrisch verbindbar ist.

Die Akkuzelle kann als eine galvanische Zelle ausgebildet sein, die einen Aufbau aufweist, bei dem ein Zellpol an einem Ende und ein weiterer Zellpol an einem gegenüberliegenden Ende zu liegen kommen. Insbesondere weist die Akkuzelle an einem Ende einen positiven Zellpol und an einem gegenüberliegenden Ende einen negativen Zellpol auf. Bevorzugt sind die Akkuzellen als NiCd- oder NiMh-, besonders bevorzugt als lithiumbasierte Akkuzellen bzw. Li-Ion Akkuzellen, ausgebildet. Die Akkuspannung des Akkupacks ist in der Regel ein Vielfaches der Spannung einer einzelnen Akkuzelle und ergibt sich aus der Schaltung (parallel oder seriell) der Akkuzellen. Bei gängigen Akkuzellen mit einer Spannung von 3,6 V ergeben sich somit beispielhafte Akkuspannung von 3,6 V, 7,2 V, 10, 8 V, 14,4 V, 18 V, 36 V, 54 V, 108 V etc. Bevorzugt ist die Akkuzelle als zumindest im Wesentlichen zylinderförmige Rundzelle ausgebildet, wobei die Zellpole an Enden der Zylinderform angeordnet sind.

Des Weiteren umfasst der Akkupack vorzugsweise eine Elektronik. Die Elektronik kann eine Speichereinheit umfassen, auf der Informationen abgespeichert sind. Zusätzlich oder alternativ ist ebenfalls denkbar, dass Informationen von der Elektronik ermittelt werden. Bei den Informationen kann es sich beispielsweise um einen Ladezustand des Akkupacks, eine Temperatur innerhalb des Akkupacks, eine Kodierung oder einer Restkapazität des Akkupacks handeln. Es ist zudem denkbar, dass die Elektronik dazu ausgebildet ist, den Lade- und/oder Entladevorgang des Akkupacks zu regeln oder zu steuern. Die Elektronik kann beispielsweise, eine Recheneinheit, eine Steuereinheit, einen Transistor, einen Kondensator, und/oder die Speichereinheit aufweisen. Die Elektronik kann zudem ein oder mehrere Sensorelemente aufweisen, beispielsweise einen Temperatursensor zur Ermittlung der Temperatur innerhalb des Akkupacks oder einen Bewegungssensor zur Ermittlung von Bewegungen. Die Elektronik kann alternativ oder zusätzlich ein Kodierungselement, wie beispielsweise ein Kodierungswiderstand, aufweisen.

Des Weiteren wird vorgeschlagen, dass zwischen einem ersten flexiblen Bereich einer ersten Akkuzellenaufnahme und einem zweiten flexiblen Bereich einer zweiten Akkuzellenaufnahme ein Stützelement angeordnet ist, das zur mechanischen Versteifung der ersten Akkuzellenaufnahme und der zweiten Akkuzellenaufnahme ausgebildet ist. Vorteilhaft kann dadurch die mechanische Stabilität des Zellenhalters weiter verbessert werden. Das Stützelement ist vorzugsweise einstückig mit dem Zellenhalter ausgebildet.

Weiterhin wird vorgeschlagen, dass das Stützelement einem ersten starren Bereich der ersten Akkuzellenaufnahme und einem zweiten starren Bereich der zweiten Akkuzellenaufnahme zugeordnet ist. Das Stützelement weist insbesondere zwei gegenüberliegende Seiten auf, wobei die gegenüberliegenden Seiten unterschiedliche Akkuzellenaufnahmen begrenzen.

Zudem wird vorgeschlagen, dass der flexible Bereich und der starre Bereich einteilig oder einstückig ausgebildet sind. Vorteilhaft kann dadurch eine kostengünstige Herstellung realisiert werden.

Des Weiteren wird vorgeschlagen, dass der flexible Bereich einen federnden Arm aufweist, der zur kraftschlüssigen Fixierung der Akkuzelle in der Akkuzellenaufnahme ausgebildet ist. Der federnder Arm ist vorzugsweise einstückig mit dem Zellenhalter ausgebildet. Alternativ ist ebenso denkbar, dass der federnde Arm aus einem anderen Material wie der Zellenhalter besteht, beispielsweise einer Hartplastikkomponente, insbesondere TPE. Vorteilhaft kann dadurch die Fixierung verbessert werden.

Weiterhin wird vorgeschlagen, dass der federnde Arm derart ausgebildet und angeordnet ist, dass ein Abstand des federnden Arms von dem Stützelement von einem Durchmesser der Akkuzelle abhängig ist. Insbesondere ist der federnde Arm derart ausgebildet, dass ein Durchmesser des flexiblen Bereichs kleiner ist, als ein minimaler Durchmesser der Akkuzelle im Rahmen der Herstellungstoleranz.

Zudem wird vorgeschlagen, dass die Akkuzellenaufnahmen jeweils zumindest eine Öffnung aufweisen, über die die Akkuzellen entlang einer Verbindungsrichtung in den Akkuzellenaufnahmen aufnehmbar sind. Die Akkuzellenaufnahmen weisen jeweils vorzugsweise eine einzige Öffnung auf, die an einer Stirnseite der Akkuzellenaufnahme angeordnet ist.

Des Weiteren wird vorgeschlagen, dass zwischen dem federnden Arm und dem Stützelement ein Hohlraum angeordnet ist, wobei eine Größe des Hohlraums von dem Durchmesser der Akkuzelle abhängt. Der Hohlraum erstreckt sich insbesondere gleichförmig entlang der Verbindungsrichtung.

Weiterhin wird vorgeschlagen, dass das Stützelement auf zumindest einer Stirnseite ein Zentrierelement für einen Zellverbinder aufweist. Der Zellverbinder ist insbesondere zur elektrischen Verbindung zumindest einer Akkuzelle mit der Elektronik und/oder der elektrischen Schnittstelle vorgesehen. Der Zellverbinder ist vorzugsweise stoffschlüssig, beispielsweise über eine Lötverbindung oder eine Schweißverbindung, mit einem der Zellpole der Akkuzelle verbunden.

Zudem betrifft die Erfindung einen Akkupack mit einem Zellenhalter wie zuvor beschrieben und mit zumindest zwei Akkuzellen. Vorteilhaft kann dadurch eine besonders vorteilhafte Fixierung der Akkuzellen im Akkupack realisiert werden.

Des Weiteren wird vorgeschlagen, dass der federnde Arm im verbundenen Zustand an einer insbesondere einzelnen Akkuzelle anliegt. Der federnde Arm ist insbesondere derart ausgebildet, dass je größer der Durchmesser die Akkuzelle ist, desto größer die von dem federnden Arm auf die Akkuzelle einwirkende Kraft ist.

Weiterhin wird vorgeschlagen, dass sich das Stützelement entlang der Verbindungsrichtung erstreckt. Insbesondere ist das Stützelement beabstandet zu der Akkuzelle angeordnet ist.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Bezugszeichen von Merkmalen unterschiedlicher Ausführungsformen der Erfindung, die sich im Wesentlichen entsprechen, werden mit derselben Zahl und mit einem die Ausführungsform kennzeichnenden Buchstaben versehen.

Es zeigen:
Fig. 1 eine schematische Seitenansicht einer Handwerkzeugmaschine mit einem Akkupack;
Fig. 2 eine schematische Explosionsansicht des Akkupacks;
Fig. 3 eine Vorderansicht eines Zellenhalters des Akkupacks gemäß Fig. 2;
Fig. 4 eine Teilansicht des Zellenhalters gemäß Fig. 3;
Fig. 5 einen Längsschnitt durch den Zellenhalter gemäß Fig. 3;
Fig. 6 eine perspektivische Ansicht des Zellenhalters gemäß Fig. 3 verbunden mit Zellverbindern;
Fig. 7 eine alternative Ausführungsform eines Zellenhalters;

### Beschreibung der Ausführungsbeispiele

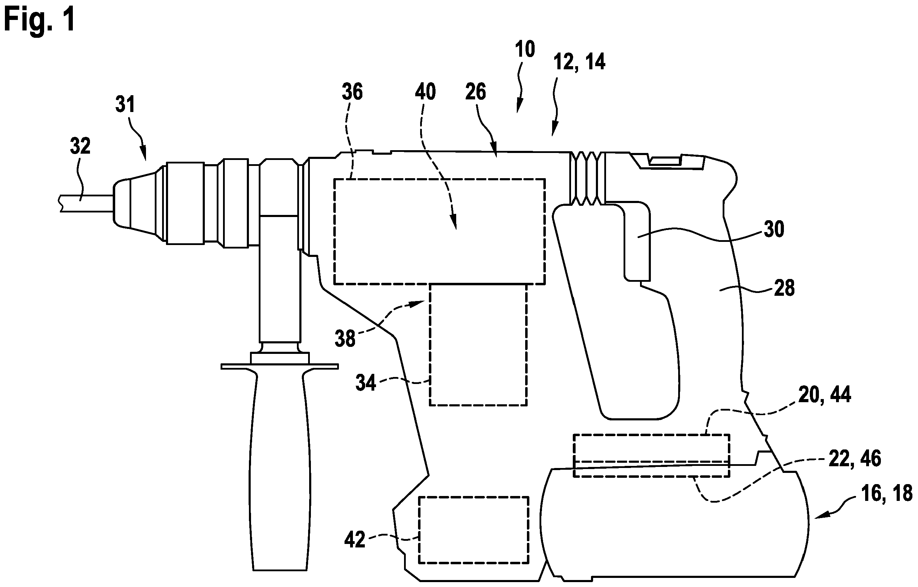

In Fig. 1 ist eine Seitenansicht eines Systems 10 bestehend aus einem als eine Handwerkzeugmaschine 12 ausgebildeten Verbraucher 14 und einem als ein Handwerkzeugmaschinenakkupack 16 ausgebildeten Akkupack 18 gezeigt. Die Handwerkzeugmaschine 12 ist somit als Akku-Handwerkzeugmaschine ausgebildet und wird im Betrieb über den Akkupack 18 mit Energie versorgt. Die Handwerkzeugmaschine 12 und der Akkupack 18 weisen jeweils eine mechanische Schnittstelle 20, 22 auf, über die die beiden Komponenten des Systems 10 miteinander lösbar verbunden sind. Der Akkupack 18 ist somit als ein Wechselakkupack ausgebildet und kann durch einen gleichen oder einen ähnlichen Akkupack ausgewechselt werden. Die Handwerkzeugmaschine 12 ist beispielhaft als ein Bohrhammer 24 ausgebildet.

Die Handwerkzeugmaschine 12 weist ein Gehäuse 26 auf, an dessen rückseitigem Ende ein Handgriff 28 mit einem Betriebsschalter 30 zum Ein- und Ausschalten der Handwerkzeugmaschine 12 angeordnet ist. Am vorderen Ende des Gehäuses 26 der Handwerkzeugmaschine 12 ist eine Werkzeugaufnahme 31 angeordnet, die zur Aufnahme eines Einsatzwerkzeugs 32 vorgesehen ist. Zwischen dem Handgriff 28 und der Werkzeugaufnahme 31 ist eine einen Elektromotor 34 und ein Getriebe 36 aufweisende Antriebseinheit 38 angeordnet. Das Getriebe 36 umfasst eine Schlagwerkeinheit 40 und ist oberhalb des Elektromotors 34 angeordnet. Die Schlagwerkeinheit 40 umfasst ein pneumatisches Schlagwerk. Unterhalb des Elektromotors 34 ist eine Elektronik 42 angeordnet, über die die Handwerkzeugmaschine 12 regel- oder steuerbar ist. Der Akkupack 18 ist unterhalb des Handgriffs 28 und benachbart zu der Elektronik 42 angeordnet.

Der Akkupack 18 und der Verbraucher 14 weisen jeweils eine zueinander korrespondierende elektrische Schnittstelle 44, 46 auf, über die der Akkupack 18 elektrisch mit dem Verbraucher 14, insbesondere der Elektronik 42 des Verbrauchers 14, verbindbar ist. Im miteinander verbundenen Zustand stellt der Akkupack 18 die Energieversorgung für den Verbraucher 14 bereit.

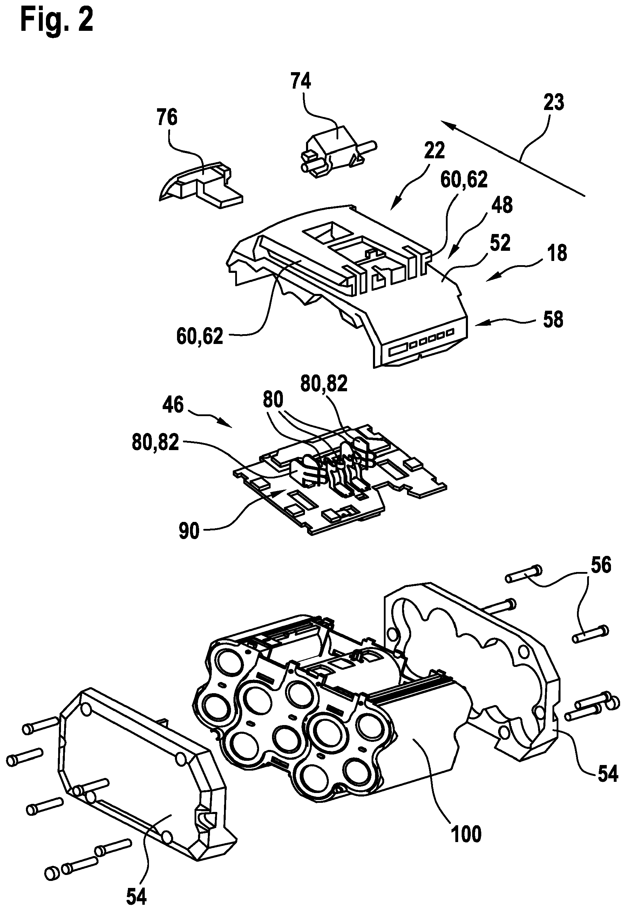

In Fig. 2 ist eine schematische Explosionsansicht des erfindungsgemäßen Akkupacks 18 zu sehen.

Der Akkupack 18 ist über die mechanische Schnittstelle 22 mechanisch mit dem Verbraucher 14 lösbar verbunden. Der Akkupack 18 weist ein Akkupackgehäuse 48 auf, das beispielhaft mehrteilig ausgebildet ist. Das Akkupackgehäuse 48 besteht aus einem kunststoffhaltigen Gehäusematerial. Vorzugsweise ist das Akkupackgehäuse 48 aus einem Polycarbonat oder einem Polyethylen mit hoher Dichte (HD PE) ausgebildet. Das Akkupackgehäuse 48 ist insbesondere als ein Außengehäuse ausgebildet. Das Akkupackgehäuse 48 ist beispielhaft mehrteilig ausgebildet. Das Akkupackgehäuse 48 weist einen Zellenhalter 100, ein Schnittstellengehäuseteil 52 und zwei Seitengehäuseteile 54 auf. Die Gehäuseteile 100, 52, 54 sind über Befestigungselemente 56, die beispielhaft als Schrauben ausgebildet sind, miteinander verbunden. Die Gehäuseteile 100, 52, 54 sind alle zumindest teilweise als Außengehäuseteile ausgebildet.

Auf der Vorderseite des Akkupacks 18 ist eine Ladezustandsanzeige 58 angeordnet, über die der Ladezustand des Akkupacks 18 anzeigbar ist. Das Akkupackgehäuse 48 des Akkupacks 18, insbesondere das Schnittstellengehäuseteil 52, umfasst die mechanische Schnittstelle 22. Der Akkupack 18 ist beispielhaft als ein Schiebeakkupack ausgebildet. Der Akkupack 18 wird zur Verbindung mit der Handwerkzeugmaschine 12 entlang einer Akkuverbindungsrichtung 23 auf die Handwerkzeugmaschine 12 geschoben.

Die mechanische Schnittstelle 22 weist ein paar Halteelemente 60 auf, an denen der Akkupack 18 im mit der Handwerkzeugmaschine 12 verbundenen Zustand gehalten wird. Die Halteelemente 60 sind beispielhaft als Führungsschienen 62 ausgebildet. Die Halteelemente 60 erstrecken sich im Wesentlichen parallel zu der Akkuverbindungsrichtung 23 des Akkupacks 18. Im mit der Handwerkzeugmaschine 12 verbundenen Zustand liegen nicht dargestellte Führungsschienen der mechanischen Schnittstelle 20 der Handwerkzeugmaschine 12 an den Führungsschienen 62 an. Zudem weist die mechanische Schnittstelle 22 des Akkupacks 18 ein Verriegelungselement 74 auf. Das Verriegelungselement 74 ist beweglich, insbesondere rotatorisch beweglich, im Akkupackgehäuse 48 des Akkupacks 18 gelagert. Das Verriegelungselement 74 ist zur Verriegelung des Akkupacks 18 mit der Handwerkzeugmaschine 12 im verbundenen Zustand ausgebildet. Das Verriegelungselement 74 ist beispielhaft als ein Rastelement ausgebildet, das in eine nicht dargestellte Ausnehmung im Gehäuse 26 der Handwerkzeugmaschine 12 einrastet. Zur Lösung dieser kraft- und formschlüssigen Verbindung weist der Akkupack 18 ein Bedienelement 76 auf, das mechanisch mit dem Verriegelungselement 74 gekoppelt ist und über welches das Verriegelungselement 74 im verbundenen Zustand aus der Ausnehmung heraus bewegt werden kann. Das Bedienelement 76 ist beispielhaft als ein Tastelement ausgebildet und parallel zu der Verbindungsrichtung 23 bedienbar.

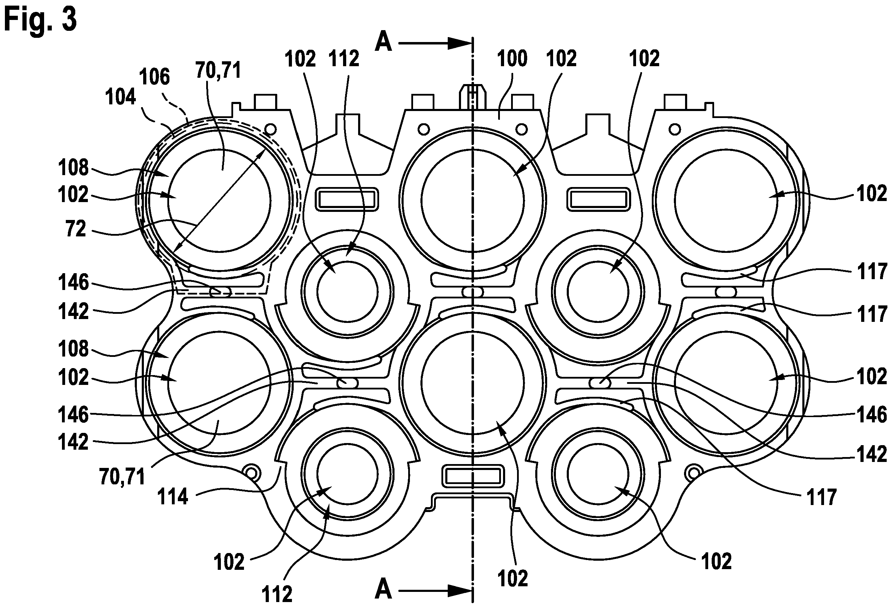

Der Akkupack 18 umfasst beispielhaft zehn Akkuzellen 70 (siehe Fig. 3), die im Zellenhalter 100 angeordnet sind. Der Akkupack 18 ist als ein 18 V Akkupack ausgebildet. Der Akkupack 18 ist beispielhaft als ein zweilagiger Akkupack 18 ausgebildet. Unter einem zweilagigen Akkupack 18 soll dabei insbesondere verstanden werden, dass die Akkuzellen 70 in zwei Lagen angeordnet sind, wobei innerhalb einer Lage die Akkuzellen 70 nebeneinander im Wesentlichen auf einer Ebene angeordnet sind und innerhalb einer Lage die Anzahl der Akkuzellen 70 die Anzahl an Lagen nicht unterschreitet. Eine Lage umfasst beispielhaft fünf Ackuzellen 70. Es ist ebenso denkbar, dass der Akkupack 18 als ein dreilagiger oder vierlagiger Akkupack ausgebildet ist. Zudem ist denkbar, dass eine Lage eine unterschiedliche Anzahl an Akkuzellen 70 aufweist, beispielhaft 1 bis 4 Akkuzellen 70 oder mehr als 5 Akkuzellen.

Die elektrische Schnittstelle 46 weist beispielhaft fünf elektrische Kontaktelemente 80 auf. Die fünf elektrischen Kontaktelementen 80 sind im montierten Zustand zwischen den Halteelementen 60 angeordnet. Die elektrischen Kontaktelemente 80 sind zumindest teilweise zur Verbindung mit nicht dargestellten elektrischen Kontaktelementen der elektrischen Schnittstelle 44 der Handwerkzeugmaschine 12 oder einer nicht dargestellten Ladevorrichtung ausgebildet. Das Schnittstellengehäuse 52 weist Ausnehmungen auf, in denen die elektrischen Kontaktelemente 80 angeordnet und über welche sie zur elektrischen Verbindung zugänglich ausgebildet sind. Zwei der elektrischen Kontaktelemente 80 sind als Leistungskontakte 82 ausgebildet, über welche im Betrieb ein elektrischer Strom zur Versorgung der Handwerkzeugmaschine 12 mit Energie fließt.

Drei der elektrischen Kontakteelemente 80 sind als Zusatzkontakte ausgebildet. Einer der Zusatzkontakte ist dabei zur Übermittlung einer Temperaturkenngröße als Temperaturkontakt ausgebildet. Die anderen beiden Zusatzkontakte sind als Codierkontakte ausgebildet und mit einem Codierwiderstand verbunden.

Der Akkupack 18 weist zudem eine Elektronik 90 zur Steuerung oder Regelung des Akkupacks 18 auf. Die Elektronik 90 umfasst eine Leiterplatte 92, auf der die elektrischen Kontaktelement 80 angeordnet sind. Zudem umfasst die Leiterplatte 92 eine nicht dargestellte Recheneinheit und eine nicht dargestellte Speichereinheit.

In Fig. 3 ist der Zellenhalter 100 in einer Vorderansicht gezeigt. Der Zellenhalter 100 weist beispielhaft zehn Akkuzellenaufnahmen 102 auf. Der Zellenhalter 100 ist beispielhaft einstückig ausgebildet. Die Akkuzellenaufnahmen 102 sind beispielhaft zur Aufnahme jeweils einer einzelnen Akkuzelle 70 ausgebildet.

Die Akkuzellen 70 weisen einen Durchmesser 72 auf, der herstellungsbedingt einer gewissen Toleranz unterliegt. Somit weisen die Akkuzellen 70 unterschiedliche Durchmesser auf 72.

Die Akkuzellenaufnahmen 102 weisen jeweils einen flexiblen Bereich 104 und einen starren Bereich 106 auf, wobei der flexible Bereich 104 vollständig im starren Bereich 106 angeordnet ist. Die Akkuzellen 70 sind vollständig im flexiblen Bereich 104 angeordnet. Insbesondere ist der flexible Bereich 104 derart ausgebildet, dass er sich an die Größe bzw. den Durchmesser 72 der Akkuzellen 70 anpasst. Insbesondere ist der flexible Bereich 104 ein Teil des starren Bereichs 106. Im Querschnitt betrachtet liegt der Anteil des flexiblen Bereichs 104 am starren Bereich 106 insbesondere im Bereich 75% bis 95%, vorzugsweise 80% bis 90%.

Die Akkuzellenaufnahmen 102 weisen jeweils eine erste Öffnung 108 auf, über die die Akkuzelle 70 mit der Akkuzellenaufnahme 102 entlang einer Verbindungsrichtung 110 verbindbar ist. Die Akkuzellenaufnahmen 102 weisen beispielhaft jeweils nur eine Öffnung 108 auf, sodass die Akkuzellen 70 nur von einer Seite in den Zellenhalter 100 einschiebbar sind. Die Öffnungen 108 sind derart angeordnet, dass ein Teil der Akkuzellen 70 von einer ersten Seite einschiebbar sind und der andere Teil der Akkuzellen 70 von einer der ersten Seite gegenüberliegenden zweite Seite einschiebbar sind.

Die Akkuzellenaufnahmen 102 weisen jeweils eine zweite Öffnung 112 auf, die der ersten Öffnung 108 gegenüberliegend angeordnet. Über die zweite Öffnung 112 ist keine Aufnahme der Akkuzellen 70 möglich. Die zweiten Öffnungen 112 sind im Durchmesser kleiner als die Öffnungen 108 ausgebildet. Die zweiten Öffnungen 112 weisen ein Anschlagelement 114 auf, das einen Anschlag für die aufzunehmende Akkuzelle 70 bildet. Im verbundenen Zustand liegt die Akkuzelle 70 vorzugsweise am Anschlagelement 114 an.

Die erste Öffnungen 108 und die zweiten Öffnungen 112 sind insbesondere zur elektrischen Kontaktierung der Akkuzellen 70 vorgesehen. Im verbundenen Zustand sind die Zellpole 71 der Akkuzellen 70 mit Zellverbindern 73 über ein Schweißverfahren verbunden. Einzelne Zellverbinder 73 liegen dabei beispielhaft an zwei oder vier Akkuzellen 70 an. Über die Zellverbinder 73 sind die Akkuzellen 70 mit den Leistungskontakten 82 verbunden.

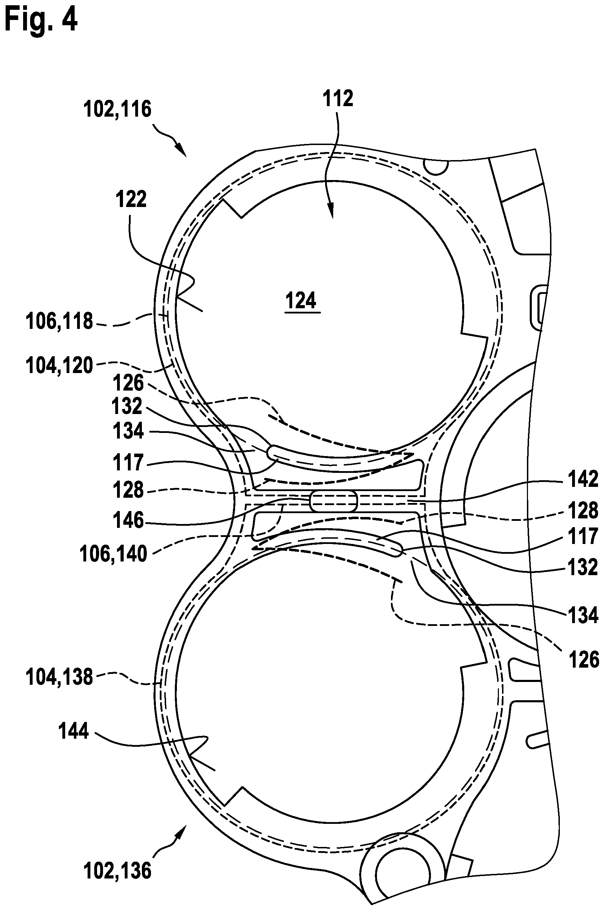

In Fig. 4 sind zwei Akkuzellenaufnahmen 102 des Zellenhalters 100 in einer vergrößerten Ansicht gezeigt.

Die erste Akkuzellenaufnahme 116 weist einen ersten flexiblen Bereich 118 und einen ersten starren Bereich 120 auf.

Der erste starre Bereich 120 ist derart ausgebildet, dass im Querschnitt betrachtet unabhängig von der Größe der vorgesehenen Akkuzelle 70 der starre Bereich seine Größe nicht verändert. Der erste starre Bereich 120 weist eine Innenwandung 122 auf, die einen im Querschnitt betrachtet geschlossenen Hohlraum 124 umschließt.

Je Akkuzellenaufnahme 102 weist der Zellenhalter 100 zumindest einen federnden Arm 117 auf. Der federnde Arm 117 ist beispielhaft einstückig mit dem Zellenhalter 100 ausgebildet, es ist allerdings ebenso denkbar, diesen aus einem anderen Material auszubilden und mit dem Zellenhalter 100 zu verbinden. Der federnde Arm 117 ragt in den Hohlraum 124 des ersten starren Bereichs 120 hinein. Der federnde Arm 117 der ersten Akkuzellenaufnahme 116 begrenzt im Querschnitt betrachtet die Größe des ersten flexiblen Bereichs 118.

In Fig. 4 ist der federnde Arm 117 zusätzlich in einer minimalen Position 126 und einer maximalen Position 128 gestrichelt eingezeichnet. In der minimalen Position 126 des federnden Arms 117 ist die Größe des ersten flexiblen Bereichs 118 minimal. Insbesondere ist der federnde Arm 117 im nicht mit der Akkuzelle 70 verbundenen Zustand in der minimalen Position angeordnet. In der maximalen Position ist die Größe des ersten flexiblen Bereichs 118 maximal.

Der federnde Arm 117 weist eine Länge auf, die vorzugsweise zumindest 25%, bevorzugt zumindest 50% des Durchmessers oder Radius der vorgesehenen Ackuzelle 70 entspricht.

Des Weiteren umfasst der federnde Arm 117 ein offenes Ende 132, das benachbart zu der Innenwandung 122 des ersten starren Bereichs 120 angeordnet ist. Zwischen dem offenen Ende 132 und der Innenwandung 122 weist die Akkuzellenaufnahme 102 eine Spalt 134 auf, der sich von der ersten Öffnung 108 zu der zweiten Öffnung 112 durchgehend erstreckt.

Benachbart zu der ersten Akkuzellenaufnahme 116 ist eine zweite Akkuzellenaufnahme 136 angeordnet.

Die zweite Akkuzellenaufnahme 136 weist einen zweiten flexiblen Bereich 138 und einen zweiten starren Bereich 140 auf, die im Wesentlichen identisch zu denen der ersten Akkuzellenaufnahme 116 ausgebildet sind.

Der federnde Arme 117 der zweiten Akkuzellenaufnahme 136 ist im Wesentlichen identisch zu dem federnden Arm 117 der ersten Akkuzellenaufnahme 116 ausgebildet, insbesondere hinsichtlich einer Länge, einer Dicke und einer Geometrie, sodass die federnden Arme 117 im Wesentlichen die gleichen Kraftcharakteristika aufweisen. Unterscheiden tun sich die federnden Arme 117 hinsichtlich ihrer Positionierung und Orientierung. Insbesondere erstrecken sich die federnden Arme 117 im Wesentlichen parallel und gegenläufig zueinander, sodass die offenen Enden 132 auf unterschiedlichen Seiten angeordnet sind.

Zwischen den beiden federnden Armen 117 ist ein Stützelement 142 angeordnet. Das Stützelement 142 begrenzt sowohl den ersten starren Bereich 120 der ersten Akkuzellenaufnahme 116 als auch den zweiten starren 140 Bereich der zweiten Akkuzellenaufnahme 136. Insbesondere ist das Stützelement 142 Teil der Innenwandung 122 der ersten Akkuzellenaufnahme 116 und Teil einer Innenwandung 144 der zweiten Akkuzellenaufnahme 136.

Das Stützelement 142 ist beispielhaft als eine ebene Wandung ausgebildet. Das Stützelement 142 ist vorzugsweise derart angeordnet, dass ein Abstand des Stützelements 142 von dem federnden Arm 117 der ersten Akkuzellenaufnahme 116 im Wesentlichen einem Abstand des Stützelements 142 von dem federnden Arm 117 der zweiten Akkuzellenaufnahme 136 entspricht. Der Abstand des Stützelements 142 von dem federnden Arm 117 ist dabei abhängig von der Position des federnden Arms 117 bzw. der Größe des flexiblen Bereichs 104.

Das Stützelement 142 ist insbesondere derart ausgebildet, dass eine Verformung bedingt durch eine Verformung benachbarter Akkuzellenaufnahmen 102 im Wesentlichen ausgeschlossen wird. Das Stützelement 142 ist beispielhaft einstückig mit dem Zellenhalter 100 ausgebildet. Es ist alternativ ebenso denkbar, dass das Stützelement 142 aus einem anderen Bauteil/Werkstoff ausgebildet ist und mit dem Zellenhalter 100 verbunden ist. Beispielhaft ist ebenso denkbar, dass das Stützelement 142 metallisch, insbesondere als ein metallischer Einleger, ausgebildet ist.

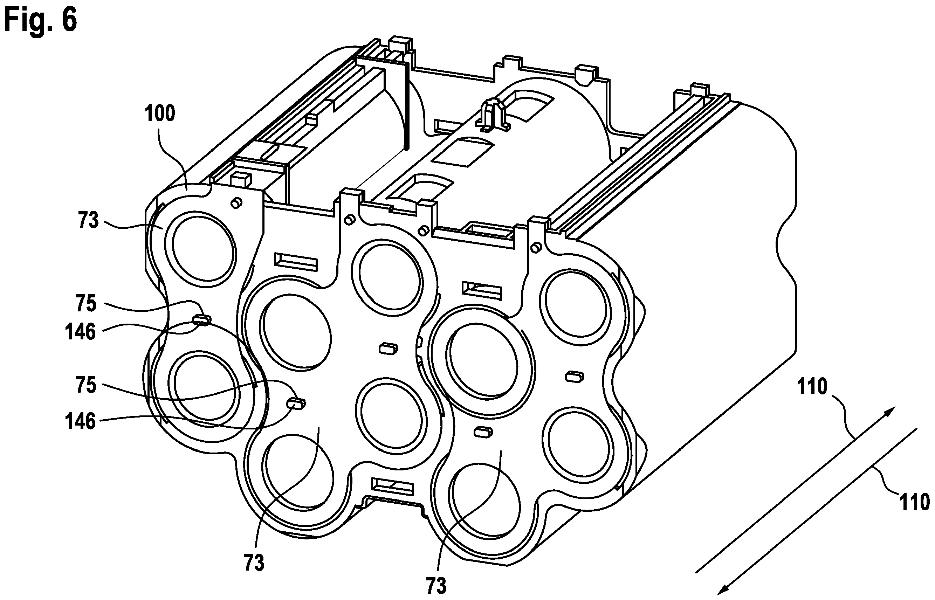

Das Stützelement 142 weist zudem ein Zentrierelement 146 auf, das zur Zentrierung des Zellverbinders (siehe Fig. 6) vorgesehen ist. Das Zentrierelement 146 ist beispielhaft als ein im Wesentlichen rechteckiger Fortsatz ausgebildet, der sich in Verbindungsrichtung 110 erstreckt. Insbesondere weist das Stützelement 142 auf zwei unterschiedlichen Seiten jeweils zumindest ein Zentrierelement 146 auf. Vorzugsweise entspricht der Abstand der Zentrierelemente 146 der Länge des Stützelements 142 und der Länge des Zellenhalters 100.

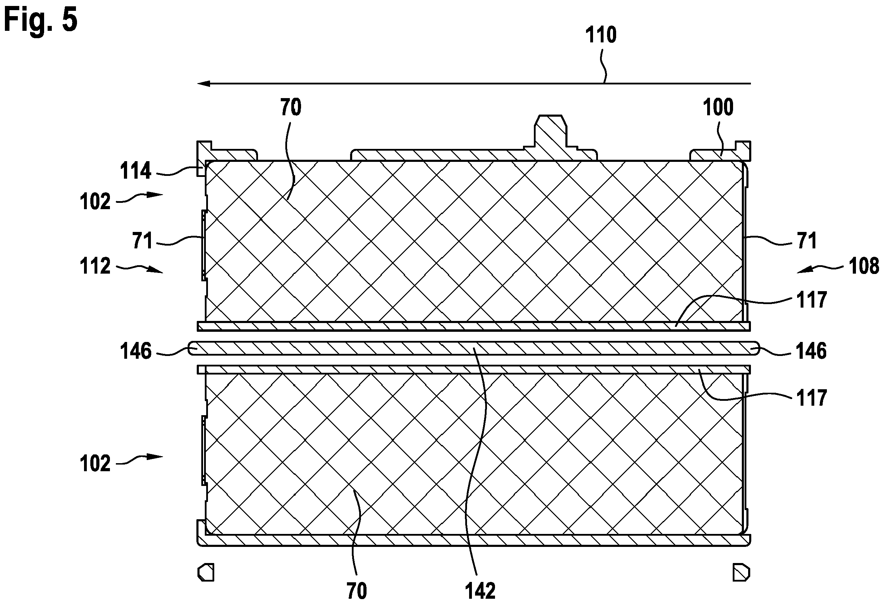

Fig. 5 ist ein Seitenschnitt durch den Zellenhalter 100 mit verbundenen Akkuzellen 70 gezeigt. Die federnden Arme 117 liegen insbesondere über die ganze Länge der Akkuzellen 70 an einer Außenfläche bzw. Mantelfläche der Akkuzellen 70 an und beaufschlagen diese mit einer radial nach innen gerichteten Kraft. Das Stützelement 142 ist beabstandet zur Akkuzelle 70 angeordnet. Der Abstand ist dabei im Wesentlichen konstant.

In Fig. 6 ist eine perspektivische Ansicht des Zellenhalters 100 mit eingesetzten Akkuzellen 70 gezeigt, wobei die Akkuzellen 70 mittels Zellverbindern 73 elektrisch verbunden sind.

Die Zellverbinder 73 weisen jeweils zumindest eine Aussparung 75, in die der Zellenhalter 100, insbesondere das Stützelement 142, beispielhaft das Zentrierelement 146, eingreift. Die Aussparungen 75 sind dabei mittig zwischen zwei zu verbindenden Akkuzellen 70 angeordnet.

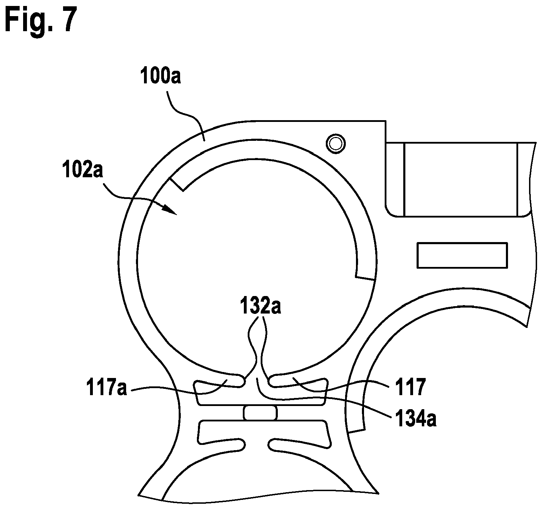

In Fig. 7 ist eine alternative Ausführungsform des Zellenhalters 100 in einer Teilansicht gezeigt. Der Zellenhalter 100a weist je Akkuzellenaufnahme 102a zwei federnde Arme 117a auf. Die federnden Arme 117a weisen offene Enden 124a auf, die aufeinander gerichtet sind, sodass der Spalt 134a zwischen den federnden Armen 117a angeordnet ist.

## Patentansprüche

1. Zellenhalter für zumindest zwei Akkuzellen (70), aufweisend zumindest zwei Akkuzellenaufnahmen (102), die zur Aufnahme einer einzelnen Ackuzelle (70) ausgebildet sind, wobei die Akkuzellenaufnahmen (102) jeweils einen starren Bereich (106) und einen flexiblen Bereich (104) aufweisen,
**dadurch gekennzeichnet, dass**
der flexible Bereich (104) teilweise oder vollständig im starren Bereich (106) angeordnet ist.

2. Zellenhalter Anspruch 1, **dadurch gekennzeichnet, dass** zwischen einem ersten flexiblen Bereich (118) einer ersten Akkuzellenaufnahmen (116) und einem zweiten flexiblen Bereich (138) einer zweiten Akkuzellenaufnahmen (136) ein Stützelement (142) angeordnet ist, das zur mechanischen Versteifung der ersten Akkuzellenaufnahmen (116) und der zweiten Akkuzellenaufnahmen (136) ausgebildet ist.

3. Zellenhalter nach Anspruch 2, **dadurch gekennzeichnet, dass** das Stützelement (142) einem ersten starren Bereich (120) der ersten Akkuzellenaufnahmen (116) und einem zweiten starren Bereich (140) der zweiten Ackuzellenaufnahmen (136) zugeordnet ist.

4. Zellenhalter nach einem der vorhergehenden Ansprüche, **dadurch gekennzeichnet, dass** der flexible Bereich (104) und der starre Bereich (106) einteilig oder einstückig ausgebildet sind.

5. Zellenhalter nach einem der vorhergehenden Ansprüche, **dadurch gekennzeichnet, dass** der flexible Bereich (104) einen federnden Arm (116) aufweist, der zur kraftschlüssigen Fixierung der Akkuzelle (70) in der Akkuzellenaufnahmen (102) ausgebildet ist.

6. Zellenhalter nach Anspruch 5, **dadurch gekennzeichnet, dass** der federnde Arm (116) derart ausgebildet und angeordnet ist, dass ein Abstand des federnden Arms (116) von dem Stützelement (142) von einem Durchmesser (72) der Akkuzelle (70) abhängig ist.

7. Zellenhalter nach einem der vorhergehenden Ansprüche, **dadurch gekennzeichnet, dass** die Akkuzellenaufnahmen (102) jeweils zumindest eine Öffnung (108) aufweisen, über die die Akkuzellen (70) entlang einer Verbindungsrichtung (110) in der Akkuzellenaufnahme (102) aufnehmbar sind.

8. Zellenhalter nach einem der Ansprüche 5 bis 7, **dadurch gekennzeichnet, dass** zwischen dem federnden Arm (116) und dem Stützelement (142) ein Hohlraum angeordnet ist, wobei eine Größe des Hohlraums von dem Durchmesser (72) der Akkuzelle (70) abhängt.

9. Zellenhalter nach einem der Ansprüche 2 bis 8, **dadurch gekennzeichnet, dass** das Stützelement (142) auf zumindest einer Stirnseite ein Zentrierelement (146) für einen Zellverbinder (73) aufweist.

10. Akkupack mit einem Zellenhalter gemäß einem der vorhergehenden Ansprüche, mit zumindest zwei Akkuzellen (70).

11. Akkupack nach Anspruch 10, **dadurch gekennzeichnet, dass** der federnde Arm (116) im verbundenen Zustand an einer insbesondere einzelnen Ackuzelle (70) anliegt, insbesondere über einen Linienkontakt anliegt.

12. Akkupack nach einem der Ansprüche 10 bis 11, **dadurch gekennzeichnet, dass** das Stützelement (142) sich entlang der Verbindungsrichtung (110) erstreckt.

13. Akkupack nach einem der Ansprüche 8 bis 12, **dadurch gekennzeichnet, dass** das Stützelement (142) beabstandet zu der Akkuzelle (70) angeordnet ist.
